# EUROPÄISCHE PATENTANMELDUNG

(11) **EP 4 324 325 A1**
(43) Veröffentlichungstag der Anmeldung: **21.02.2024**
(21) Anmeldenummer: 23179678.0
(22) Anmeldetag: 16.06.2023
(51) Int. Cl.: A01D 57/04

(54) **SELBSTFAHRENDE ERNTEMASCHINE SOWIE VERFAHREN ZUR IDENTIFIZIERUNG EINER SCHIEFSTELLUNG EINER HASPEL**

(30) Priorität: 19.08.2022 DE 102022120984
(71) Anmelder: CLAAS Selbstfahrende Erntemaschinen GmbH, 33428 Harsewinkel (DE)
(72) Erfinder: Beschorn, Udo, 33428 Harsewinkel (DE); Eidhoff, Lukas, 33378 Rheda-Wiedenbrück (DE); Kiffmeier, Norbert, 33428 Harsewinkel (DE); Wielenberg, Andreas, 32049 Herford (DE)
(74) Vertreter: CLAAS Gruppe

(57) **Zusammenfassung**

Die vorliegende Erfindung betrifft eine selbstfahrende Erntemaschine (1) insbesondere ein Mähdrescher (2), umfassend mindestens einen Erntevorsatz (3) sowie mindestens eine Auswerteeinheit (4, wobei der Erntevorsatz (3) mindestens einen Rahmen (5) und mindestens eine Haspel (6) umfasst, wobei die Haspel (6) drehbar angetrieben und in ihrer Position verstellbar ist, wobei die Haspel (6) mittels mindestens zwei Haspeltragarmen (7) an dem Rahmen (5) gehalten ist, wobei jedem der Haspeltragarme (7) mindestens eine Sensoreinheit (8) zugeordnet ist und wobei die Sensoreinheiten (8) Daten hinsichtlich der Position der Haspel (6) an jedem der Haspeltragarme (7) erfassen.

Um eine selbstfahrende Erntemaschine (1) bereit zu stellen, die die Nachteile des Stands der Technik beseitigt und eine Synchronisation der Haspeltragarme (7) verbessert, ist erfindungsgemäß vorgesehen, dass die Auswerteeinheit (4) dazu vorgesehen und geeignet ist, die von den Sensoreinheiten (8) erfassten Daten auszuwerten und mindestens einen für eine Schiefstellung der Haspel (6) verantwortlichen Haspeltragarm (7) zu identifizieren und eine Information hierüber an eine Ausgabeeinheit (9) zu übermitteln, wobei die Ausgabeeinheit (9) auf Grundlage der übermittelnden Information eine Fehlermeldung an einen Bediener der Erntemaschine (1) ausgibt.

## Beschreibung

Die vorliegende Anmeldung betrifft eine selbstfahrende Erntemaschine, insbesondere einen Mähdrescher, gemäß dem Oberbegriff von Anspruch 1. Des Weiteren betrifft die vorliegende Anmeldung ein Verfahren zur Identifizierung einer Schiefstellung einer Haspel gemäß dem Oberbegriff von Anspruch 11.

Selbstfahrende Erntemaschinen werden zum Abernten von Erntegut verwendet. Typischerweise weisen Erntemaschinen dabei einen Erntevorsatz auf, um die Ernte zu erleichtern. Bei dem Erntevorsatz kann es sich beispielsweise um ein Schneidwerk für einen Mähdrescher handeln. Das Schneidwerk weist in aller Regel einen Rahmen auf, an welchem verschiedene Bauteile befestigt sind. Unter anderem ist eine Haspel typischerweise mittels mindestens zweier Haspeltragarme an dem Rahmen befestigt. Die Haspel dient dazu, abzuerntende Ähren vor dem Abschneiden vorsichtig vorzulehnen, um sicherzustellen, dass das sich bereits aus den Ähren lösende Erntegut nicht auf das Feld, sondern auf einen Schneidwerkstisch des Mähdreschers fällt und somit dem Mähdrescher zugeführt werden kann. Hierzu ist die Haspel typischerweise drehbar angetrieben. Um eine Anpassung an das abzuerntende Feld zu ermöglichen, ist die Haspel ferner in ihrer Position verstellbar. Weiterhin weist das Schneidwerk Sensoreinheiten auf, die Daten in Bezug auf die Position der Haspel erfassen. Die Daten werden dabei in aller Regel an jedem der Haspeltragarme erfasst, um eine Schiefstellung der Haspel erkennen zu können. Darüber hinaus weist die Erntemaschine eine Auswerteeinheit auf, mittels der die von den Sensoreinheiten erfassten Daten ausgewertet werden können.

Dem Stand der Technik sind derartige selbstfahrende Erntemaschinen in vielfältiger Ausgestaltung als bekannt zu entnehmen. Beispielsweise offenbart die EP 3 420 798 B1 eine Erntemaschine mit einem Schneidwerk mit einer Haspel, die an zumindest zwei Haspeltragarmen angeordnet ist. Den Haspeltragarmen sind Hydraulikzylinder zugeordnet, mittels derer die Position der Haspeltragarme einstellbar ist. Weiterhin sind den Haspeltragarmen Sensoreinheiten zum Erfassen der Position der Haspeltragarme zugeordnet. Da sich die Position der Haspeltragarme relativ zueinander über einen längeren Zeitraum verändern kann, ist mittels der Sensoreinheiten ein resultierender Versatz zwischen den Haspelarmen feststellbar und durch entsprechendes Ansteuern der Hydraulikzylinder korrigierbar, sodass die Haspel horizontal ausgerichtet wird.

Aufgrund von (interner) Leckage eines Hydrauliksystems der Hydraulikzylinder oder aufgrund von thermischen Einflüssen kann es dazu kommen, dass ein Hydraulikzylinder den Haspeltragarm nicht in die gewünschte Lage überführt und ein Haspeltragarm oder (bei drei Haspeltragarmen) bis zu zwei Haspeltragarme unterschiedliche Positionen einnehmen. Dies führt zu einer schiefstehenden Haspel, sodass die Haspel nicht mehr parallel zu einem Schnittsystem des Mähdreschers ausgerichtet ist. Dadurch wird die Funktion der Haspel beeinträchtigt. Da die Höhe der Haspel im Stand der Technik nur mit Hilfe eines Winkelsensors an einem Haspeltragarm erfasst wird, kann dieser Fall durch eine Software, die die Verstellung der Haspelhöhe steuert, nicht erkannt werden. Das führt unter anderem dazu, dass Funktionen wie eine Haspel-Kabinendach- Absicherung und eine Haspel-Messer-Absicherung nicht sicher ausführbar sind.

Es ist Aufgabe der vorliegenden Erfindung, die die Nachteile des Stands der Technik zu beseitigen und eine selbstfahrende Erntemaschine bereitzustellen, die eine Synchronisation der Haspeltragarme verbessert.

Die vorliegende Aufgabe wird durch eine selbstfahrende Erntemaschine mit den Merkmalen des Anspruchs 1 gelöst. Vorteilhafte Ausgestaltungen sind Gegenstand der Unteransprüche.

Es ist erfindungsgemäß vorgesehen, dass die Auswerteeinheit dazu vorgesehen und geeignet ist, die von den Sensoreinheiten erfassten Daten auszuwerten und mindestens einen für eine Schiefstellung der Haspel verantwortlichen Haspeltragarm zu identifizieren und eine Information hierüber an eine Ausgabeeinheit zu übermitteln, wobei die Ausgabeeinheit auf Grundlage der übermittelnden Information eine Fehlermeldung an einen Bediener der Erntemaschine ausgibt.

Die erfindungsgemäße selbstfahrende Erntemaschine hat viele Vorteile. Da mittels der Ausgabeeinheit aufgrund der ausgegebenen Information für einen Bediener der Erntemaschine erkennbar ist, welcher Haspeltragarm für die Schiefstellung der Haspel ursächlich ist, kann der Bediener die entsprechenden, für die Positionierung verantwortlichen Bauteile tauschen oder reparieren. Die Erntemaschine ermöglicht somit die Identifizierung des für die Schiefstellung der Haspel verantwortlichen Haspeltragarms sowie eine besonders effektive Möglichkeit zur Behebung der Schiefstellung. Es hat sich nämlich herausgestellt, dass eine Reparatur oder ein Austausch der verantwortlichen Bauteile einfacher und kostengünstiger als eine synchrone Bewegung der Haspeltragarme durch eine Positionsregelung oder Geschwindigkeitsregelung der einzelnen Haspeltragarme zu realisieren. Ferner ist besonders von Vorteil, dass ein Kundendienst im Rahmen einer Diagnose nunmehr einen Hinweis erhält, welcher Haspeltragarm nicht wie gewünscht arbeitet. Auf diese Weise lassen sich die für die Schiefstellung verantwortlichen Bauteile besonders einfach und schnell identifizieren und bei Bedarf austauschen oder reparieren.

Die Identifizierung des für die Schiefstellung verantwortlichen Haspeltragarms erfolgt dabei vorzugsweise mittels eines Vergleichs der erfassten Daten hinsichtlich der Position der Haspel an jedem der Haspeltragarme mit einem Soll-Wert. Auch kann ein relativer Vergleich zwischen den Daten jedes Haspeltragarms erfolgen. In jedem Fall ist dabei vorzugsweise vorgesehen, dass die Sensoreinheiten die Daten hinsichtlich der Position der Haspel mehrfach (redundant) erfassen. Auf diese Weise kann eine Haspelhöhenautomatik der Haspel auch bei einem Ausfall einer Sensoreinheit weiter betrieben werden.

Gemäß einer vorzugsweisen Ausgestaltung der Erfindung ist vorgesehen, dass die Haspel mittels mindestens zwei Hydraulikzylindern in ihrer Lage verstellbar ist, wobei jedem der Haspeltragarme mindestens ein Hydraulikzylinder zugeordnet ist. Die Verwendung von Hydraulikzylindern hat sich als besonders von Vorteil erwiesen, da diese besonders zuverlässig sind.

Gemäß einer weiteren vorzugsweisen Ausgestaltung sind drei Haspeltragarme zum Halten der Haspel vorgesehen, wobei jedem der Haspeltragarme eine Sensoreinheit zugeordnet ist. Insbesondere bei Haspeln mit einer bestimmten Länge hat sich die Verwendung von drei Haspeltragarmen als besonders vorteilhaft erwiesen, da so sichergestellt werden kann, dass die Haspel über ihre gesamte Länge in einem gleichem Abstand zu dem abzuerntenden Feld ausgerichtet werden kann, ohne dass sie in der Mitte aufgrund eines Eigengewichts der Haspel durchhängt. Dabei kann vorzugsweise vorgesehen sein, dass die Haspel in mehrere Segmente unterteilt ist, wobei jedem Segment ein Haspeltragarm sowie eine Sensoreinheit zugeordnet sind.

Ebenso kann gemäß einer vorzugsweisen Ausgestaltung vorgesehen sein, dass die Haspeltragarme jeweils in zwei Endbereichen und einem Mittelbereich der Haspel angeordnet sind, wobei dem in den Endbereichen zugeordneten Haspeltragarmen vorzugsweise jeweils ein Hydraulikzylinder zugeordnet ist und dem in dem Mittelbereich der Haspel angeordneten Haspeltragarm vorzugsweise zwei Hydraulikzylinder zugeordnet sind. Eine derartige Anordnung bietet ebenfalls den Vorteil einer besonders zuverlässigen Ausrichtung der Haspel.

In jedem Fall ist jedoch sicherzustellen, dass die Hydraulikzylinder synchron zueinander arbeiten, um so eine Schiefstellung der Haspel zu verhindern. Um dies zu gewährleisten, muss ein von den Hydraulikzylindern gemeinsam ausgebildetes System in der unteren Position (alle Hydraulikzylinder vollständig eingefahren) oder oberen Position (alle Hydraulikzylinder vollständig ausgefahren) entlüftet und synchronisiert werden. Um eine besonders einfache Synchronisierung der Hydraulikzylinder zu ermöglichen, ist vorzugsweise vorgesehen, dass die Hydraulikzylinder gemeinsam eine Master-Slave-Anordnung ausbilden. Bei einer Master-Slave-Anordnung erfolgt bei einem Ausfahren einer Kolbenstange eines Hydraulikzylinders eine Druckansteuerung zweier Hydraulikzylinder, welche jeweils einen Slavezylinder bilden, über eine Anschlussleitung an einer Kolbenseite eines Masterzylinders. Der Masterzylinder steuert die beiden Slavezylinder über die Anschlussleitung. Auf diese Weise fahren die beiden Hydraulikzylinder synchron aus.

Sofern der Erntevorsatz mit zwei Hydraulikzylindern versehen ist, kann vorgesehen sein, dass diese hydraulisch zu einem Master-Slave-Paar verbunden sind. Für den Fall, dass der Erntevorsatz drei Hydraulikzylinder aufweist, von denen jeweils einer in dem Endbereich der Haspel und zwei in dem Mittelbereich der Haspel angeordnet sind, kann vorgesehen sein, dass die Hydraulikzylinder im Mittelbereich hydraulisch und mechanisch parallelgeschaltet sind, während die beiden Hydraulikzylinder im Mittelbereich jeweils auch mit einem der Hydraulikzylinder in einem der Endbereich hydraulisch zu einem Master-Slave-Paar verbunden sind.

Eine vorzugsweise Ausgestaltung der Erfindung sieht vor, dass es sich bei den von den Sensoreinheiten erfassten Daten um einen Winkel zwischen den Haspeltragarmen und einer Schneidwerksmulde der Erntemaschine handelt. Die Haspel lässt sich während des Betriebs in verschiedene Positionen überführen. Um feststellen zu können, ob eine Schiefstellung der Haspel vorliegt, hat es sich als besonders vorteilhaft erwiesen, den Winkel zwischen dem jeweiligen Haspeltragarm und einer Schneidwerksmulde zu bestimmen. Sofern Abweichungen zwischen den ermittelten Winkeln an den verschiedenen Haspeltragarmen vorliegen, kann eine Schiefstellung identifiziert werden, die einem Bediener mittels der Ausgabeeinheit angezeigt werden kann.

Gemäß einer vorzugsweisen Ausgestaltung der Erfindung ist ferner vorgesehen, dass die Auswerteeinheit ausgehend von den ermittelten Winkeln eine Höhe der Haspel an dem jeweiligen Haspeltragarm relativ zu der Schneidwerkmulde bestimmt. Dabei ist vorzugsweise vorgesehen, dass die Sensoreinheiten eine minimale und eine maximale Höhe der Haspel erfassen. Auf diese Weise sind vorteilhafter Weise häufig verwendete Funktionen wie eine Haspel-Messer-Absicherung (minimale Haspelhöhe) und eine Haspel- Kabinendach-Absicherung (maximale Haspelhöhe) auch bei einer schiefstehenden Haspel gewährleistet.

Ausgehend von den an jedem der Haspeltragarmen bestimmten Höhe bestimmt die Auswerteeinheit vorzugsweise einen relativen Versatz zwischen den Haspeltragarmen. Der relative Versatz zwischen den Haspeltragarmen ist ein weiteres Maß zur Bestimmung einer Schiefstellung der Haspel. Aus dem relativen Versatz zwischen den Haspeltragarmen lässt sich ebenso wie aus den bestimmten Winkeln eine Schiefstellung der Haspel erkennen.

Eine weitere vorzugsweise Ausgestaltung der Erfindung sieht vor, dass die Auswerteeinheit während einer vorgegeben Betriebsdauer der Erntemaschine eine Anzahl der Schiefstellungen bestimmt. Dabei kann es besonders von Vorteil sein, wenn der Vergleich zwischen den Winkeln und/oder den Höhen an den jeweiligen Haspeltragarmen in vorgegebenen zeitlichen Abständen erfolgt, sodass eine Schiefstellung der Haspel frühzeitig erkennbar ist. Auch ist somit feststellbar, ob die Schiefstellung aufgrund eines Bauteils, insbesondere eines defekten Hydraulikzylinders, vorliegt oder ob es sich lediglich um eine temporäre Schiefstellung der Haspel handelt, die schnell mittels einer Synchronisation bewegbar ist.

Eine weitere vorzugsweise Ausgestaltung der Erfindung sieht dabei vor, dass die Ausgabeeinheit eine Fehlermeldung ausgibt, wenn die Anzahl der ermittelten Schiefstellungen einen vorbestimmten Grenzwert übersteigt. Vorteilhafter Weise wird der Bediener der Erntemaschine so nicht ständig auf eine Schiefstellung der Haspel hingewiesen. Vielmehr ist vorgesehen, dass die Haspel bei einer Schiefstellung durch Überströmen des Systems der Hydraulikzylinder in der Endlage wieder synchronisiert wird. Erst, wenn die Schiefstellung der Haspel häufiger auftrifft, wird der Bediener darauf hingewiesen, da es in einem solchen Fall wahrscheinlich ist, das ein defektes Bauteil, beispielsweise ein defekter Hydraulikzylinder, für die wiederkehrende Schiefstellung der Haspel verantwortlich ist.

Die eingangs genannte Aufgabe wird ferner mittels eines Verfahrens zur Identifizierung einer Schiefstellung einer Haspel einer selbstfahrenden Erntemaschine gemäß dem Anspruch 11 gelöst. Vorteilhafte Ausgestaltungen sind Gegenstand der abhängigen Ansprüche.

In einem ersten Verfahrensschritt des Verfahrens werden Daten hinsichtlich einer Position der Haspel an jedem der Haspeltragarme mittels der Sensoreinheiten erfasst. In einem sich anschließenden Verfahrensschritt werden die erfassten Daten mittels einer Auswerteeinheit ausgewertet und auf Basis der ausgewerteten Daten wird mindestens ein für eine Schiefstellung der Haspel verantwortlicher Haspeltragarm identifiziert. Dabei ist vorstellbar, dass - sofern die Haspel lediglich von zwei Haspeltragarmen gehalten wird - lediglich ein Haspeltragarm für die Schiefstellung verantwortlich ist. Ebenso ist jedoch auch denkbar, dass zwei Haspeltragarme für die Schiefstellung ursächlich sind, insbesondere, wenn die Haspel von drei Haspeltragarmen gehalten wird. Nach dem Identifizieren des Haspeltragarms wird eine Information hierüber an eine Ausgabeeinheit der Erntemaschine übermittelt, sodass schließlich eine Fehlermeldung an einen Bediener der Erntemaschine ausgegeben werden kann. Die Fehlermeldung wird dabei auf einer Ausgabeeinheit ausgegeben. Bei der Ausgabeeinheit kann es sich beispielsweise um ein Display handeln. Gleichzeitig oder alternativ kann ein akustisches Signal als Fehlermeldung ausgegeben werden.

Die Vorteile des Verfahren sind vorstehend bereits dargelegt. Insbesondere ermöglicht das Verfahren die Identifizierung eines für eine Schiefstellung des Haspel verantwortlichen Haspeltragarms und zeigt diesen für einen Bediener der selbstfahrenden Erntemaschine an.

Eine vorzugsweise Ausgestaltung sieht dabei vor, dass die Fehlermeldung ausgegeben wird, wenn eine Anzahl der identifizierten Schiefstellungen der Haspel während einer vorgegebenen Betriebsdauer einen vorbestimmten Grenzwert übersteigt. Auf diese Weise kann sichergestellt werden, dass die Fehlermeldung erst dann ausgegeben wird, wenn die Schiefstellung wiederholt auftritt. Singulär auftretende Schiefstellungen der Haspel können vorzugsweise mittels einer Synchronisation der Haspeltragarme behoben werden, ohne dass ein Bediener der Erntemaschine hierüber informiert wird.

Gemäß einer vorzugsweisen Ausgestaltung der Erfindung ist ferner vorgesehen, dass die Haspeltragarme der Haspel bei Vorliegen einer Schiefstellung synchronisiert werden. Die Synchronisation der Haspeltragarme kann dabei automatisch oder händisch initiiert werden. So ist vorstellbar, dass die Haspeltragarme bei jeder Schiefstellung automatisch synchronisiert werden, während zugleich auch eine Schiefstellung über die Fehlermeldung an den Bediener der Erntemaschine ausgegeben wird. Ebenso kann eine händische Initiierung der Synchronisation dann sinnvoll sein, wenn eine Ursache für die Schiefstellung, beispielsweise eine Leckage an einem Hydraulikzylinder, untersucht werden soll, bevor die Schiefstellung behoben wird.

Sofern Hydraulikzylinder verwendet werden, um die Haspel in ihrer Position zu verändern, hat es sich als besonders vorteilhaft erwiesen, die Haspeltragarme mittels Überströmens eines Hydrauliksystems in einer Endlage der Haspeltragarme zu synchronisieren.

Die Erfindung ist nachstehend anhand eines Ausführungsbeispiels, das in den Figuren dargestellt ist, näher erläutert. Es zeigt:
- Fig. 1:: Eine Seitenansicht einer erfindungsgemäßen selbstfahrenden Erntemaschine.
- Fig. 2:: Eine Seitenansicht eines Erntevorsatzes der selbstfahrende Erntemaschine aus Figur 1.

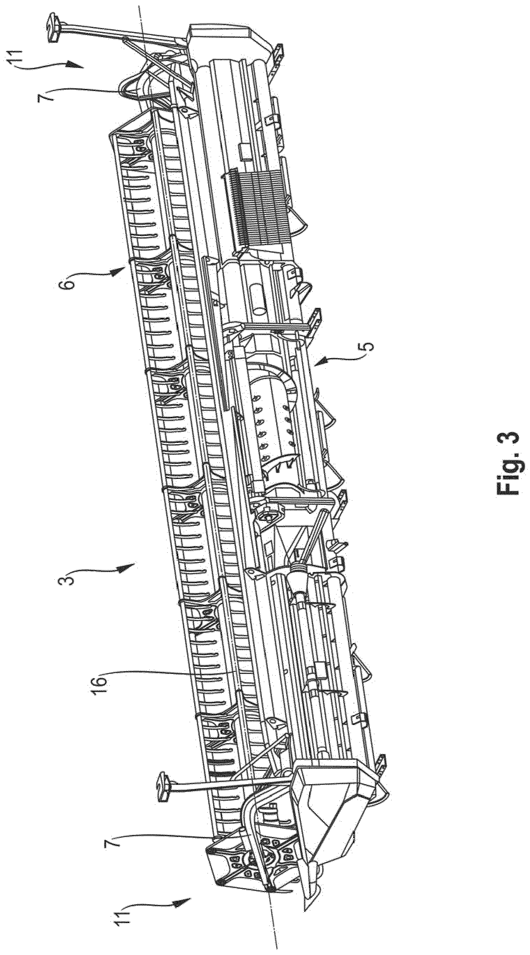

- Fig. 3:: Eine perspektivische Ansicht des Erntevorsatzes aus Figur 1.

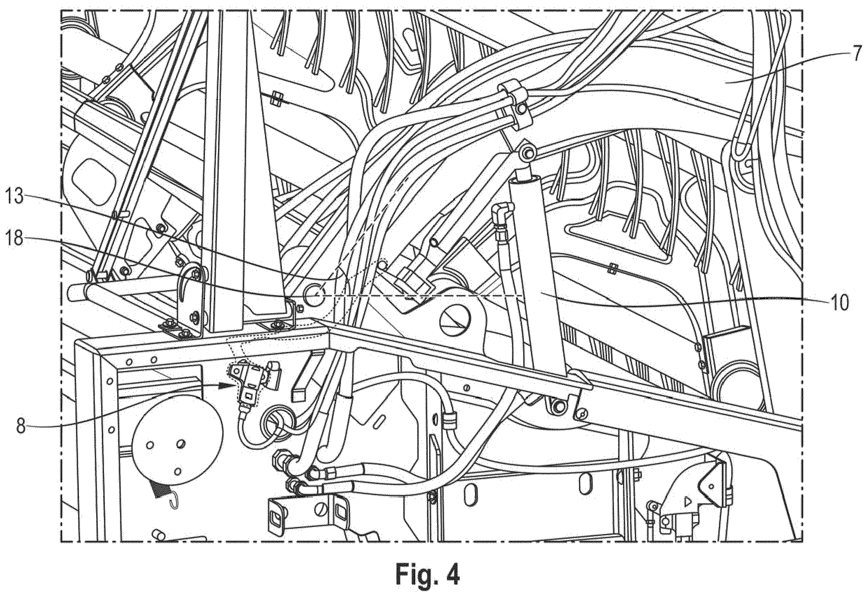

- Fig. 4:: Eine Detailansicht des Erntevorsatzes aus Figur 1.
- Fig. 5:: Eine schematische Darstellung eines Hydrauliksystems.

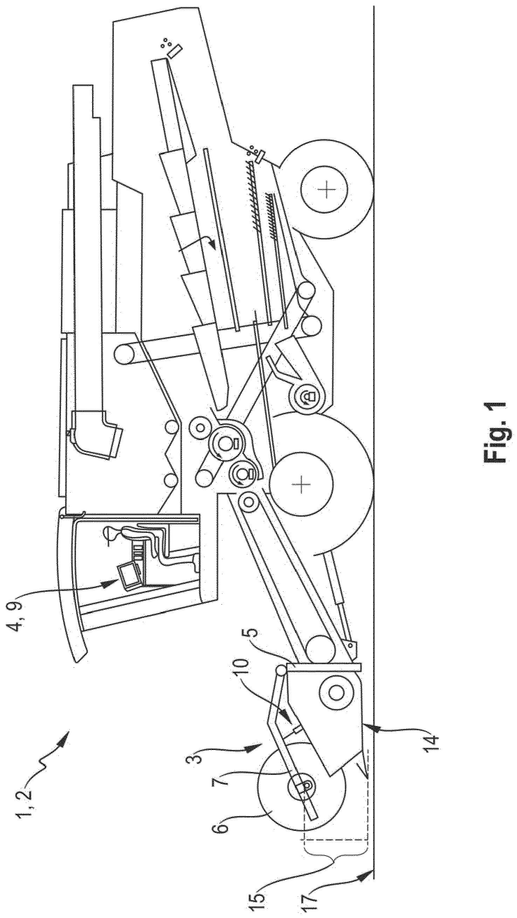

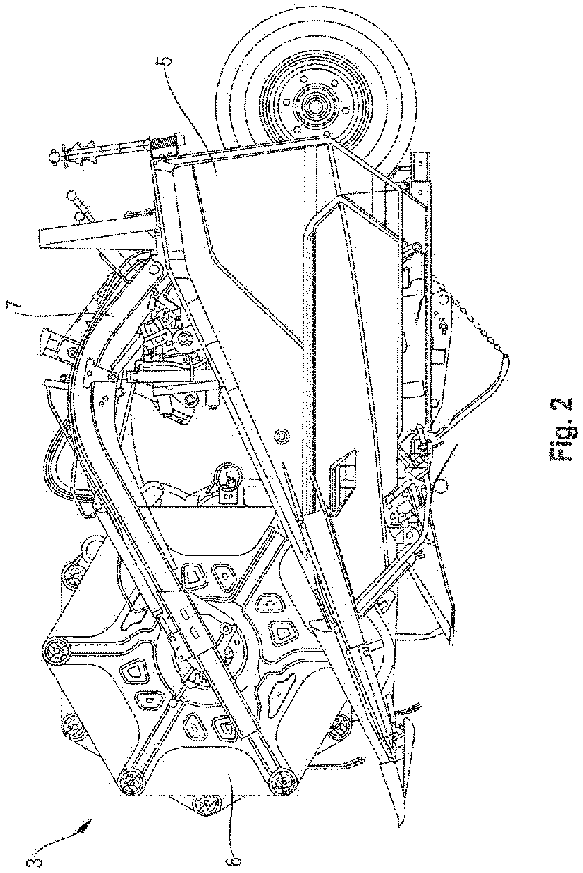

Die in der **Figur 1** gezeigte erfindungsgemäße selbstfahrende Erntemaschine **1** ist in Form eines Mähdreschers **2** ausgebildet. Der Mähdrescher **2** weist einen Erntevorsatz **3** in Form eines Schneidwerks aus. Das Schneidwerk weist eine Haspel **6** auf, die mittels zwei Haspeltragarmen **7** an einem Rahmen **5** gehalten ist, wie insbesondere aus der **Figur 2** ersichtlich ist. Die Haspel **6** ist mittels der Haspeltragarme **7** drehbar gelagert. Die beiden Haspeltragarme **7** sind jeweils in einem Endbereich **11** der Haspel 6 angeordnet. Bei einem Betrieb des Mähdrehschers **2** rotiert die Haspel **6** - in der **Figur 1** entgegen dem Uhrzeigersinn - um eine Längsachse **16** und ermöglicht somit ein sich bereits lösendes Erntegut, insbesondere Körner, dem Mähdrehscher **2** zuzuführen, bevor diese auf ein abzuerntendes Feld **17** fallen.

Zur Anpassung an das abzuerntende Feld **17** lässt sich die Haspel **6** in ihrer Position relativ zu dem Feld **17** verändern. Hierzu sind die Haspeltragarme **7** drehbar gelagert, wie insbesondere aus der **Figur 2** ersichtlich ist. Jeder Haspeltragarm **7** ist um eine Drehachse **18** drehbar, wobei die Bewegung des Haspeltragarm **7** mittels eines Hydraulikzylinders **10** steuerbar ist. Die Hydraulikzylinder **10** sind dabei in Kraft übertragender Weise mit den Haspeltragarmen **7** verbunden und derart aus- und einfahrbar, dass der jeweilige Haspeltragarm **7** jeweils in einem Winkel **13** zu einer Schneidwerksmulde **14** des Mähdreschers **2** verstellbar ist. Auf diese Weise lässt sich die Haspel **6** in ihrer Position relativ zu einem abzuerntenden Feld **17** bewegen.

Weiterhin umfasst der Erntevorsatz **3** Sensoreinheiten **8,** mittels derer Daten hinsichtlich eines Winkels **13** der Haspeltragarme **7** relativ zu der Schneidwerksmulde **14** des Mähdreschers **2** bestimmbar ist. Jedem der Haspeltragarme **7** ist dabei eine Sensoreinheit **8** zugeordnet, die Daten in Bezug auf einen Winkel **13** des jeweiligen Haspeltragarms **7** zwischen dem Haspeltragarm **7** und einer Schneidwerksmulde **14** des Mähdreschers **2** ermittelt.

Ferner umfasst die Erntemaschine **1** eine Auswerteeinheit **4.** Die Auswerteeinheit **4** verarbeitet die mittels der Sensoreinheiten **8** erfassten Daten. Dabei bestimmt die Auswerteeinheit **4** ausgehend von den Daten hinsichtlich des Winkels **13** des jeweiligen Haspeltragarms **7** eine Höhe **15** der Haspel **6** an dem jeweiligen Haspeltragarm **7** relativ zu der Schneidwerksmulde **14** des Mähdreschers **2.** In einem weiteren Schritt werden die berechneten Höhen **15** miteinander verglichen, um eine Schiefstellung der Haspel **6** feststellen zu können. Bei einer Schiefstellung der Haspel **6** ist ein Haspeltragarm **7** in einer abweichenden Höhe **15** zu der des zweiten Haspeltragarms **7** ausgerichtet, sodass die Haspel **6** insgesamt nicht mehr parallel zu der Schneidwerksmulde **14** und somit nicht optimal für ihre Funktion ausgerichtet ist.

Die Sensoreinheiten **8** erfassen die den Winkel **13** der Haspeltragarme **7** betreffenden Daten in vorbestimmten zeitlichen Abständen. Sofern die Auswerteeinheit **4** eine Schiefstellung der Haspel **6** auf Grundlage der erfassten Daten feststellt, müssen die Haspeltragarme **7** synchronisiert werden, um die Schiefstellung zu beheben.

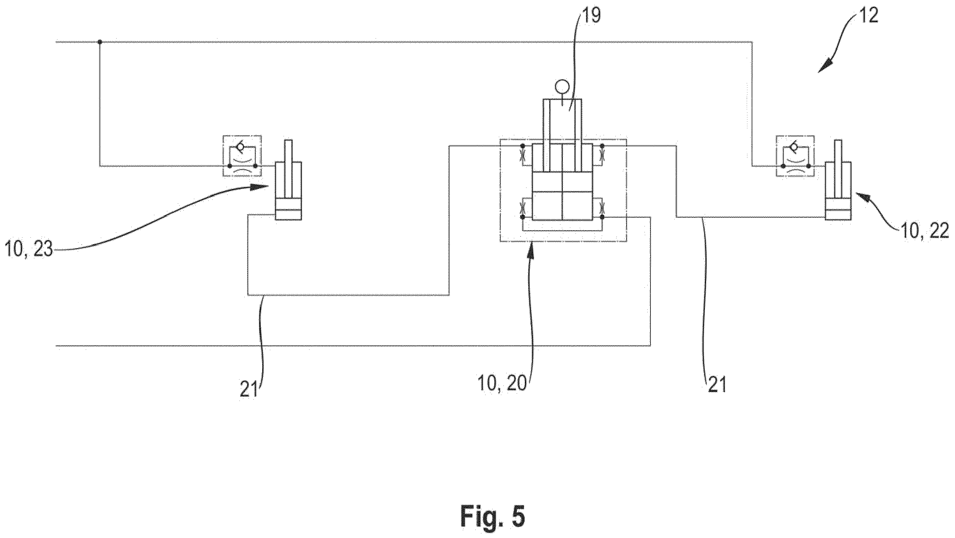

Die beiden Haspeltragarme **7** sind dabei gemeinsam mit einem weiteren Hydraulikzylinder **10** zu einer Master-Slave-Anordnung **12** zusammengeschlossen. Eine Schaltung eines hieraus gebildeten Hydrauliksystems ist schematisch in der **Figur 5** gezeigt. Bei einer Master-Slave-Anordnung **12** erfolgt bei einem Ausfahren einer Kolbenstange **19** eines Hydraulikzylinders **10,** welcher den Masterzylinder **20** darstellt, eine Druckansteuerung zweier Hydraulikzylinder **10** über jeweils eine Anschlussleitung **21.** Die angesteuerten Hydraulikzylinder **10** bilden dabei die Slavezylinder **22.** Der Masterzylinder **20** steuert die beiden Slavezylinder **22** somit über die Anschlussleitung **21.** Auf diese Weise fahren die beiden Hydraulikzylinder **10** synchron aus. Um die beiden Haspeltragarme **7** zu synchronisieren, können die Hydraulikzylinder **10** mittels Überströmens des Hydrauliksystems synchronisiert werden.

Weiterhin zählt die Auswerteeinheit **4** die während einer Betriebsdauer der Erntemaschine **1** identifizierten Schiefstellungen der Haspel **6** und vergleicht diese fortwährend mit einem vorbestimmten Grenzwert. Sofern die Anzahl der Schiefstellungen den Grenzwert überschreitet, wird eine Information über den für die Schiefstellung verantwortlichen Haspeltragarm **7** an eine Ausgabeeinheit **9** übermittelt, die schließlich eine Fehlermeldung anzeigt. Auf diese Weise wird ein Bediener der Erntemaschine **1** über den für die wiederholten Schiefstellungen der Haspel **6** verantwortlichen Haspeltragarm **7** informiert und kann den dem Haspeltragarm **7** zugeordneten Hydraulikzylinder **10** überprüfen und gegebenenfalls reparieren oder ersetzen. Ebenso kann der Bediener der Erntemaschine **1** eine Synchronisation der Haspeltragarme **7** initiieren.

### Bezugszeichenliste

- 1: Erntemaschine
- 2: Mähdrescher
- 3: Erntevorsatz
- 4: Auswerteeinheit
- 5: Rahmen
- 6: Haspel
- 7: Haspeltragarm
- 8: Sensoreinheit
- 9: Ausgabeeinheit
- 10: Hydraulikzylinder
- 11: Endbereich
- 12: Master-Slave-Paar
- 13: Winkel
- 14: Schneidwerksmulde
- 15: Höhe
- 16: Längsachse
- 17: Feld
- 18: Drehachse
- 19: Kolbenstange
- 20: Masterzylinder
- 21: Anschlussleitung
- 22: Slavezylinder

## Patentansprüche

1. Selbstfahrende Erntemaschine (1), insbesondere ein Mähdrescher (2), umfassend
- mindestens einen Erntevorsatz (3) sowie
- mindestens eine Auswerteeinheit (4),
wobei der Erntevorsatz (3) mindestens einen Rahmen (5) und mindestens eine Haspel (6) umfasst,
wobei die Haspel (6) drehbar angetrieben und in ihrer Position verstellbar ist,
wobei die Haspel (6) mittels mindestens zwei Haspeltragarmen (7) an dem Rahmen (5) gehalten ist,
wobei jedem der Haspeltragarme (7) mindestens eine Sensoreinheit (8) zugeordnet ist,
wobei die Sensoreinheiten (8) Daten hinsichtlich der Position der Haspel (6) an jedem der Haspeltragarme (7) erfassen,
**dadurch gekennzeichnet, dass**
die Auswerteeinheit (4) dazu vorgesehen und geeignet ist, die von den Sensoreinheiten (8) erfassten Daten auszuwerten und mindestens einen für eine Schiefstellung der Haspel (6) verantwortlichen Haspeltragarm (7) zu identifizieren und
eine Information hierüber an eine Ausgabeeinheit (9) zu übermitteln,
wobei die Ausgabeeinheit (9) auf Grundlage der übermittelnden Information eine Fehlermeldung an einen Bediener der Erntemaschine (1) ausgibt.

2. Selbstfahrende Erntemaschine (1) nach Anspruch 1, **dadurch gekennzeichnet, dass** die Haspel (6) mittels mindestens zwei jeweils einem Haspeltragarm (7) zugeordneten Hydraulikzylindern (10) in ihrer Position verstellbar ist.

3. Selbstfahrende Erntemaschine (1) nach Anspruch 1 oder 2, **gekennzeichnet durch** drei Haspeltragarme (7), wobei jedem der Haspeltragarme (7) eine Sensoreinheit (8) zugeordnet ist.

4. Selbstfahrende Erntemaschine (1) nach Anspruch 3, **dadurch gekennzeichnet, dass** die Haspeltragarme (7) jeweils in zwei Endbereichen (11) und einem Mittelbereich der Haspel (6) angeordnet sind, wobei dem in den Endbereichen (11) zugeordneten Haspeltragarmen (7) vorzugsweise jeweils ein Hydraulikzylinder (10) zugeordnet ist und dem Mittelbereich der Haspel (6) angeordnete Haspeltragarm (7) vorzugsweise zwei Hydraulikzylinder (10) zugeordnet sind.

5. Selbstfahrende Erntemaschine (1) nach einem der Ansprüche 2 bis 4, **dadurch gekennzeichnet, dass** die Hydraulikzylinder (10) gemeinsam eine Master-Slave-Anordnung (12) ausbilden.

6. Selbstfahrende Erntemaschine (1) nach einem der vorhergehenden Ansprüche, **dadurch gekennzeichnet, dass** die Sensoreinheiten (8) jeweils einen Winkel (13) zwischen einem der Haspeltragarme (7) und einer Schneidwerksmulde (14) der Erntemaschine (1) ermitteln.

7. Selbstfahrende Erntemaschine (1) nach Anspruch 6, **dadurch gekennzeichnet, dass** die Auswerteeinheit (4) ausgehend von den ermittelten Winkeln (13) eine Höhe (15) der Haspel (6) an dem jeweiligen Haspeltragarm (7) relativ zu der Schneidwerkmulde bestimmt.

8. Selbstfahrende Erntemaschine (1) nach Anspruch 7, **dadurch gekennzeichnet, dass** die Auswerteeinheit (4) ausgehend von der Höhe (15) der Haspel (6) an den Haspeltragarmen (7) einen relativen Versatz zwischen den Haspeltragarmen (7) bestimmt.

9. Selbstfahrende Erntemaschine (1) nach einem der vorhergehenden Ansprüche, **dadurch gekennzeichnet, dass** die Auswerteeinheit (4) während einer vorgegebenen Betriebsdauer der Erntemaschine (1) eine Anzahl der Schiefstellungen der Haspel (6) bestimmt.

10. Selbstfahrende Erntemaschine (1) nach einem der vorhergehenden Ansprüche, **dadurch gekennzeichnet, dass** die Ausgabeeinheit (9) die Fehlermeldung ausgibt, wenn die Anzahl der ermittelten Schiefstellungen einen vorbestimmten Grenzwert übersteigt.

11. Verfahren zur Identifizierung einer Schiefstellung einer Haspel (6) einer selbstfahrenden Erntemaschine (1) nach einem der Ansprüche 1 bis 10, umfassend die folgenden Verfahrensschritte:
- Erfassen von Daten hinsichtlich einer Position der Haspel (6) an jedem der Haspeltragarme (7) mittels der Sensoreinheiten (8).
**gekennzeichnet durch** die folgenden Verfahrensschritte:
- Auswerten der von den Sensoreinheiten (8) erfassten Daten mittels der Auswerteeinheit (4).
- Identifizieren mindestens einen für die Schiefstellung der Haspel (6) verantwortlichen Haspeltragarm (7) auf Grundlage der ausgewerteten Daten.
- Übermitteln einer Information über den mindestens einen verantwortlichen Haspeltragarm (7) an die Ausgabeeinheit (9) der Erntemaschine (1).
- Ausgeben einer Fehlermeldung auf der Ausgabeeinheit (9).

12. Verfahren nach Anspruch 11, **dadurch gekennzeichnet, dass** die Fehlermeldung ausgegeben wird, wenn eine Anzahl der identifizierten Schiefstellungen der Haspel (6) während einer vorgegebenen Betriebsdauer einen vorbestimmten Grenzwert übersteigt.

13. Verfahren nach Anspruch 11 oder 12, **dadurch gekennzeichnet, dass** die Haspeltragarme (7) der Haspel (6) bei Vorliegen einer Schiefstellung synchronisiert werden.

14. Verfahren nach Anspruch 12, **dadurch gekennzeichnet, dass** die Synchronisation automatisch oder händisch initiiert wird.

15. Verfahren nach einem der Ansprüche 13 oder 14, **dadurch gekennzeichnet, dass** die Haspeltragarme (7) mittels Überströmens eines Hydrauliksystems in einer Endlage der Haspeltragarme (7) synchronisiert werden.
